# EUROPEAN PATENT SPECIFICATION

(11) **EP 1 518 740 B1**
(45) Date of publication and mention of the grant of the patent: **17.11.2010**
(21) Application number: 04104609.5
(22) Date of filing: 23.09.2004
(51) Int. Cl.: B60K 17/08

(54) **A transmission for a motor vehicle, in particular for an agricultural tractor.**
Getriebe für Kraftfahrzeug insbesondere landwirtschaftlichen Traktor
Transmission pour véhicule à moteur en particulier pour tracteur agricole

(30) Priority: 26.09.2003 IT BO20030556
(43) Date of publication of application: 30.03.2005
(73) Proprietor: CNH Italia S.p.A., 41100 Modena (IT)
(72) Inventor: Tioli, Ivan, 41043, Formigine (Modena) (IT)
(74) Representative: CNH IP Department

(56) References cited:
- EP-A1- 1 334 861
- GB-A- 2 240 826
- JP-A- 59 167 329

## Description

The present invention relates to an apparatus for transmission of power in a motor vehicle, in particular in a tractor.

In the production of motor vehicles, in particular in the production of tractors, there is an ever-growing need to increase the power of vehicle engines, and this by increasing the transmission ratios. In other words, in said particular technical field, it is very useful to be able to provide a gear change mechanism with oversize distance between the centres of the transmission shafts, however without increase in the distance between the shaft of the rear PTO and the rear-transmission drive shaft. Increasing this distance would entail remodelling the superstructures and hence the entire vehicle.

In this context, it is in any case evident that it is extremely advantageous for both the axis of the engine shaft and the axis of the shaft on which the bevel pinion that transfers the motion to the drive wheels is fitted, to remain in the same position. As a result, it is possible to use both engines and rear-transmission cases already in production.

Consequently, the only parts that need to be changed are the gearbox (in general to have higher output torques), and at least one portion of the spacer set between the gear change mechanism and the rear-transmission case.

Consequently, the purpose of the present invention is to provide an apparatus for transmission of power in a motor vehicle of the aforesaid type.

JP 59 167329 discloses a planetary gearing system being installed in the front end part of a transmission case. An auxiliary transmission is connected to this main transmission via a speed increaser. A differential mechanism for rear wheel use is connected to the auxiliary transmission. The main transmission comprises a planetary gearing system which is able to change gears by locking and controlling a number of gears selectively, thus making the main transmission control easier to operate.

However, JP 59 167329 does not disclose a way to increase the transmission ratios, it only provides means to improve the selectivity and the control of the transmission.

Hence, according to the present invention, an apparatus is provided for transmission of power in a motor vehicle having the characteristics specified in Claim 1.

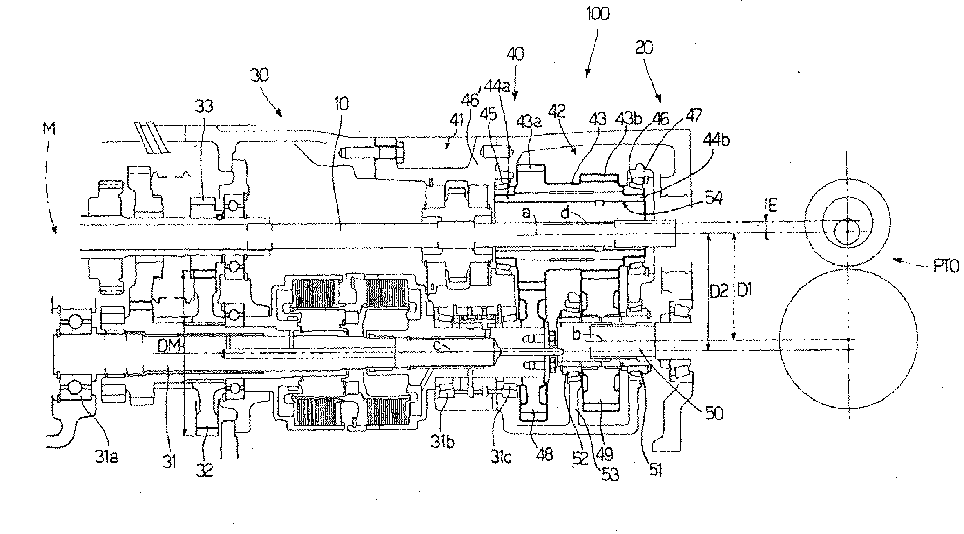

The present invention will now be described further, with reference to the accompanying single drawing, which illustrates a non-limiting example of embodiment thereof.

The single figure annexed to the present description is a longitudinal cross section of the apparatus forming the subject of the present invention.

It is to be understood that in the ensuing description only the items that are essential for an understanding of the present invention will be numbered and described. In particular, some devices, such as the gear change mechanism, the rear-transmission case, etc., will not be described in detail as regards their constructional items, because a detailed description of said items is not essential for an understanding of the present invention. Consequently, reference will be made in what follows to the gear change mechanism, to the rear-transmission case, etc., as well as to the individual blocks, without entering into a detailed description of the constructional elements contained in said devices because they are widely known to the person skilled in the art.

In the single attached figure, the reference number 100 designates as a whole an apparatus for transmission of power in a motor vehicle (not illustrated) according to the invention. The apparatus 100 comprises, in a known way, first of all an engine M (not visible in the figure) provided with an engine shaft 10 with axis (a), which moreover transfers motion also to a power take-off (PTO) (not shown).

As will emerge more clearly from what follows, the motion of the engine is transferred to a rear-transmission case 20, which comprises a shaft 50 with axis (b), on which there is fitted a bevel pinion (not illustrated) for setting the rear driving wheels (not shown) of the vehicle in motion. As is illustrated in the figure, the axes (a) and (b) are parallel and are spaced at a distance D1 from one another.

In the apparatus 100, between the engine M and the case 20, there are provided, in a known way, a gearbox 30 and a spacer 40. The engine M, the gearbox 30, the spacer 40 and the rear-transmission case 20 for transmission of the motion are set in series.

A shaft 31, on which there is fitted the last gear 32 of the gearbox 30, has an axis (c) that does not coincide with the axis (b) described previously. The shaft 31, on which the different gearing-down stages are provided (not described in detail herein), rests, on the one side, on a bearing 31a, and, on the other, on a pair of bearings 31b and 31c.

Furthermore, in a known manner, a gear 33 on the engine shaft 10 meshes with the gear 32 in the last gearing-down stage of the gearbox 30.

D2 is the distance between the axis (a) and the axis (c).
In addition, the spacer 40 consists of a traditional part 41, which will not be described in order to simplify the present description, and of a deviator device 42 for deviating the motion. The motion-deviator device 42 comprises a bushing 43, which in turn comprises a first toothed portion 43a and a second toothed portion 43b. The bushing 43 has an axis (d) that is eccentric with respect to the axis (a). The distance (E) between the two axes (d) and (a) represents the eccentricity of the bushing 43 with respect to the axis (a).

The bushing 43 is supported at one first end 44a by a bearing 45 mounted in a support 46' belonging to the part 41 of the spacer 40. The second end 44b of the bushing 43 on the other hand is supported by a bearing 46 mounted in a support 47 belonging to the part 41 of the spacer 40.

The first toothed portion 43a has a diameter greater than that of the second toothed portion 43b and meshes with a gear 48 fitted on the shaft 31 (with axis (c)) of the gearbox 30 from which it derives its motion.

The second toothed portion 43b meshes, in turn, with a gear 49 fitted on the aforementioned shaft 50 having axis (b) eccentric with respect to the axis (c) of the shaft 31. Furthermore, the shaft 50 is supported, on the one side, by a bearing 51, supported also by the aforementioned support 47 and, on the other, by a bearing 52 supported by a support 53 belonging to the part 41 of the spacer 40.

Consequently, by means of the use of the motion-deviator device 42, it is possible to compensate for any misalignment of the axis (c) with respect to the axis (b), the position of which remains fixed and is determined by the position of the drive wheels (not shown).

In other words, whilst the axis (a) of the engine shaft 10 and the axis (b) of the shaft 50, which carries the pinion designed to set the drive wheels in rotation, remain fixed (because it would not be economically advantageous to alter the positions and the geometry of the engine M and of the transmission case 20), it is possible to use, by adopting the device 42, a gearbox 30 having an output axis (c) in any position.

In brief, it may be said that the motion-deviator device 42 comprises a bushing 43 (with axis (d) parallel to the axis (a) of the engine shaft 10), having two toothed portions 43a and 43b, and two gears 48 (with axis (c)) and 49 (with axis (b)) that mesh, respectively, with the first toothed portion 43a and with the second toothed portion 43b.

Of course, if it were necessary to change the distance D2, i.e., if, for example, the axis (c) were to move away from the axis (a), because in the construction of the apparatus 100 it has been chosen to have a gearbox 30 with a larger gear 32 (with diameter DM), it would be sufficient to exchange the motion-deviator device 42 with another similar one having toothed portions 43a, 43 and larger gears 48, 49.

The motion coming from the shaft 31 is deviated onto the bushing 43 on account of the meshing of the gear 48 with the toothed portion 43a. Since the bushing 43 is set in rotation about the axis (d), the toothed portion 43b, which meshes with the gear 49, will cause rotation of the shaft 50, which, in turn, will transmit the motion to the bevel pinion (not shown) and to the drive wheels (not illustrated).

In addition, it should be noted that the bushing 42 is traversed longitudinally by a through hole 54, through which the engine shaft 10 passes. As has been mentioned already, this shaft 10 transmits motion to a PTO system.

In comparison to a conventional transmission in which the axes a and d, respectively c and b are coaxial with one another, the present invention offers the advantage of enabling gears with a larger diameter to be used, nevertheless maintaining a predetermined distance D1 between the PTO shaft and the final vehicle drive shaft. Indeed, due to the slight lowering of axis c over a distance D2-D1, the diameters of gears 32 and 33 on the one hand, and gear 48 on the other hand, can be increased. In addition, raising axis d slightly above axis a over the distance E enables larger gears 43a and 43b on the one hand and gear 49 on the other hand to be used. All the above results in a considerable increase in power transmission ratio of the overall transmission 100.

The advantages of the apparatus 100 forming the subject of the present invention are the following:
- in the same vehicle it is possible to use parts of gear change mechanisms as normally designed but nevertheless have different distances between axis (a) and axis (c) (a distance which may be different from the normally expected distance D1 of the transmission case), changing only the bushing 43;
- it is possible to increase the distance between centres of the gear change 30 and the gear reducer or multiplier formed by the gears 48/43a, 43b/49, so as to be able to increase the power transferred in the transmission; it should likewise be noted that also in the last pair of gears 43b and 49 for return of the motion it is possible to increase the distance between centres with the use of an off-centre bushing 43; and
- there is an evident economic advantage, in so far as it is possible to increase the power of the engine and to make available, if required, more power for other services (such as hydraulic pumps, etc.), without, however, having to change the rear transmission, which in general is sized according to the weight of the vehicle and to the corresponding drive stress, which is given, as is known, by the product of the weight of the motor vehicle and the adherence of the wheels of the vehicle to the ground.

## Claims

1. A transmission (100) for transferring power in a motor vehicle, in particular a tractor, said apparatus comprising:
- an engine shaft (10) having a first axis (a) for being connected to an engine (M);
- a rear transmission box (20), which comprises an exit shaft (50) having a second axis (b); said exit shaft (50) being operable to transmit motion to the driving wheels of said motor vehicle;
- an intermediate gearbox (30) comprising a shaft (31) having a third axis (c), parallel to said first axis (a) for transmitting motion from said engine (M) to said exit shaft (50); said third axis (c) being offset from said second axis (b); and
- motion from said intermediate gearbox (30) being transmitted to the exit shaft (50) over a deviating device (42), said deviating device (42) comprises a bushing (43) having a fourth axis (d) offset from said first axis (a) over an eccentricity (E); and
**characterized in that** said bushing (43) comprises an axial through hole (54) with fourth axis (d) allowing the engine shaft (10) with first axis (a) to pass through in an eccentric manner for transferring drive to a power take-off (PTO) system.

2. A transmission according to claim 1, **characterized in that** the distance (D2) between said third axis (c) and said first axis (a) is larger than the distance (D1) between said second axis (b) and said first axis (a).

3. A transmission according to claim 1 or 2, **characterized in that** said bushing (43) comprises a first toothed portion (43a) meshing with a gear (48) on said shaft (31) of the intermediate gearbox (30) and a second toothed portion (43b) meshing with a gear (49) on said exit shaft (50).

4. A transmission according to any of the preceding claims, **characterized in that** the distance between said fourth axis (d) and said second axis (b) is larger than the distance (D1) between said first axis (a) and said second axis (b).

## Patentansprüche

1. Getriebe (100) zur Übertragung von Leistung in einem Kraftfahrzeug, insbesondere einem Traktor, wobei die Vorrichtung Folgendes umfasst:
- eine Motor-Welle (10) mit einer ersten Achse (a) zur Verbindung mit einem Motor (M);
- ein hinteres Getriebe (20), das eine Ausgangswelle (50) mit einer zweiten Achse (b) aufweist, wobei die Ausgangswelle (50) betreibbar ist, um eine Antriebsbewegung auf die Antriebsräder des Kraftfahrzeugs zu übertragen;
- ein Zwischengetriebe (30), das eine Welle (31) mit einer dritten Achse (c) parallel zu der ersten Achse (a) aufweist, um Antriebsbewegung von dem Motor (M) auf die Ausgangswelle (50) zu übertragen, wobei die dritte Achse (c) gegenüber der zweiten Achse (b) versetzt ist; und
- wobei die Antriebsbewegung von dem Zwischengetriebe (30) auf die Ausgangswelle (50) über eine Versetzungseinrichtung (42) übertragen wird, wobei die Versetzungseinrichtung (42) eine Buchse (43) mit einer vierten Achse (d) umfasst, die gegenüber der ersten Achse (a) um eine Exzentrizität (E) versetzt ist; und
**dadurch gekennzeichnet, dass** die Buchse (43) eine axiale Durchgangsbohrung (54) mit einer vierten Achse (d) umfasst, die es der Motorwelle (10) mit der ersten Achse (a) ermöglicht, in exzentrischer Weise hindurch zu laufen, um Antrieb auf ein Zapfwellen-(PTO-) System zu übertragen.

2. Getriebe nach Anspruch 1, **dadurch gekennzeichnet, dass** der Abstand (D2) zwischen der dritten Achse (c) und der ersten Achse (a) größer als der Abstand (D1) zwischen der zweiten Achse (b) und der ersten Achse (a) ist.

3. Getriebe nach Anspruch 1 oder 2, **dadurch gekennzeichnet, dass** die Buchse (43) einen ersten verzahnten Abschnitt (43a), der mit einem Zahnrad (48) auf der Welle (31) des Zwischengetriebes (20) kämmt, und einen zweiten verzahnten Abschnitt (43b) aufweist, der mit einem Zahnrad (49) auf der Ausgangswelle (50) kämmt.

4. Getriebe nach einem der vorhergehenden Ansprüche, **dadurch gekennzeichnet, dass** der Abstand zwischen der vierten Achse (d) und der zweiten Achse (b) größer als der Abstand (D1) zwischen der ersten Achse (a) und der zweiten Achse (b) ist.

## Revendications

1. Système de transmission (100) destiné à transmettre la puissance dans un véhicule à moteur, notamment un tracteur, ledit système comprenant :
- un arbre moteur (10) ayant un premier axe (a) et destiné à être accouplé à un moteur (M),
- une boîte de transmission arrière (20), qui comprend un arbre de sortie (50) ayant un second axe (b), ledit arbre de sortie (50) pouvant fonctionner pour transmettre le mouvement aux roues motrices du dit véhicule à moteur, et
- une boîte de transmission intermédiaire (30) comprenant un arbre (31) ayant un troisième axe (c) parallèle au dit premier axe (a), destiné à transmettre le mouvement du dit moteur (M) au dit arbre de sortie (50), ledit troisième axe (c) étant déporté par rapport au dit second axe (b),
- le mouvement de la dite boîte de transmission intermédiaire (30) étant transmis à l'arbre de sortie (50) par l'intermédiaire d' un dispositif déviant (42) et ledit dispositif déviant (42) comprenant un manchon (43) ayant un quatrième axe (d) décalé par rapport au dit premier axe (a) par une excentricité (E),
**caractérisé en ce que** ledit manchon (43) comprend un trou traversant axial (54) dans le quatrième axe (d) permettant à l'arbre moteur (10) dans le premier axe (a) de passer au travers d' une manière excentrique pour transmettre l'entraînement à un système de prise de force (PTO).

2. Système de transmission selon la revendication 1, **caractérisé en ce que** la distance (D2) entre ledit troisième axe (c) et ledit premier axe (a) est plus grande que la distance (D1) entre ledit second axe (b) et ledit premier axe (a).

3. Système de transmission selon la revendication 1 ou 2, **caractérisé en ce que** ledit manchon (43) comprend une première portion dentée (43a) engrenant avec un pignon (48) sur ledit arbre (31) de la boîte de transmission intermédiaire (30) et une seconde portion dentée (43b) engrenant avec un pignon (49) sur ledit arbre de sortie (50).

4. Système de transmission selon l'une quelconque des revendications précédentes, **caractérisé en ce que** la distance entre ledit quatrième axe (d) et ledit second axe (b) est plus grande que la distance (D1) entre ledit premier axe (a) et ledit second axe (b).
